(19) Europäisches Patentamt
European Patent Office
Office européen des brevets

(11) EP 0 690 414 A2

(12) EUROPEAN PATENT APPLICATION

(43) Date of publication:
03.01.1996 Bulletin 1996/01

(51) Int Cl.$^6$: G06T 11/20

(21) Application number: 95304400.5

(22) Date of filing: 22.06.1995

(84) Designated Contracting States:
DE FR GB

(30) Priority: 28.06.1994 JP 146018/94

(71) Applicant: International Business Machines Corporation
Armonk, N.Y. 10504 (US)

(72) Inventors:
- Oyamada, Koji
  Hadano-shi, Kanagawa-ken (JP)
- Ito, Takayuki
  Sagamihara-shi, Kanagawa-ken (JP)

(74) Representative: Davies, Simon Robert
Winchester, Hampshire SO21 2JN (GB)

# (54) A system and method for drawing vector data

(57) An object of the present invention is to obtain the starting point of a stream line easily when vector data in a certain space is displayed on a display by the stream line. A method of displaying stream lines, comprising the steps of dividing the space into a plurality of tetrahedral cells and collecting a position data of each vertex of them and a vector data at the position, calculating a critical point which is in each of the tetrahedral cells and wherein the vector data becomes zero, from the collected position and vector data, calculating a Jacobian matrix J when a critical point is found, calculating eigenvalues of the calculated Jacobian matrix J, calculating the starting point of a stream line which is in each of the tetrahedral cells and is moved a microscopic distance from the critical point for each of the eigenvalues, calculating a stream line from the starting point, and displaying the stream line on a display.

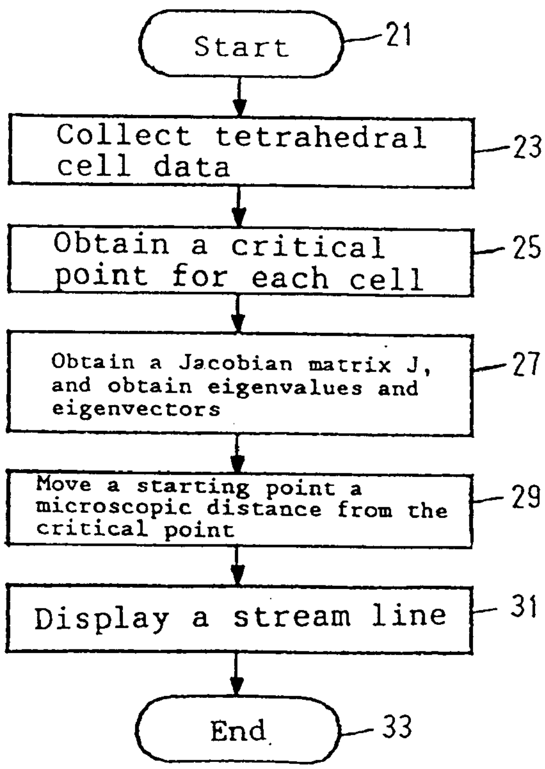


FIG. 2

EP 0 690 414 A2

## Description

The present invention relates to a system and method for drawing vector data and method and, more particularly, to a system and method for displaying a stream line in a three-dimensional space.

It is possible with the use of computer graphics to display the scattering vector data in a three-dimensional space but, in many cases, it is difficult for a person looking at the display to understand what is displayed. For example, there are some cases in which, when arrows representative of vector data are displayed in a three-dimensional space, the direction of the arrows becomes vague and the arrows overlap each other in the direction of depth. For this reason, visualization is sometimes easier when done through the display of stream lines. A stream line is a curved line in which the tangents at each point thereof are parallel to a velocity field at each such point.

It is important in the display of a stream line to find an appropriate starting point for the stream line. That is, the stream line is a locus described by an imaginary object, whose weight and size are zero, when released at a certain starting point. Accordingly the stream line to be drawn differs if the starting point differs. Usually, what a person attempting to display such a stream line wants to know is not the simple concept of a fluid flow but whether a particular phenomenon occurs somewhere in an observed region, such as, for example, a vortex. Therefore, if an inappropriate starting point is selected, the locus described by the imaginary object is unrelated to the vortex and valid data cannot be obtained. The starting point can be interactively selected on a graphic display. However, since there are usually an infinite number of selectable points, it is difficult to select an appropriate starting point within a short period of time unless the distribution of vector data is known in advance.

The starting point can be selected effectively by setting it in the vicinity of a near critical point. The critical point is one whose vector data becomes zero. For example, vector data defined on a right-cross cell is targeted (refer to A. C. Globus and T. Lasinski, "A Tool for Visualizing the Topology of Three-Dimensional Vector Fields," IEEE Visualization '91, pp. 33-40, 1991). In this method, a velocity field in a cell is expressed in terms of 8 velocity vectors defined at cell points and a tri-linear interpolation. The velocity field is shown in Equations 1 and 2.

Equation 1

$$\vec{X} = \sum_{k=0}^{7} N_k \vec{X}_k$$

where $N_k = 1/8*(1 + x_k \cdot x)*(1 + y_k \cdot y)*(1 + z_k \cdot z)$.

Equation 2

$$\vec{V} = \sum_{k=0}^{7} N_k \vec{V}_k$$

This expresses the cubic shown in Figure 7 and is an equation by which a velocity V(u, v, w) is calculated at an arbitrary point X(x, y, z). In Equation 1, $X_k(x_k, y_k, z_k)$ where k = 0 to 7 is expressed as follows:

$$X_0 = (-1, -1, -1),$$

$$X_1 = ( 1, -1, -1),$$

$$X_2 = ( 1, 1, -1),$$

$$X_3 = (-1, 1, -1),$$

$$X_4 = (-1, -1, 1),$$

$$X_5 = ( 1, -1, 1),$$

$$X_6 = ( 1, 1, 1),$$

and

$$X_7 = (-1, 1, 1).$$

$V_k$ represents the speed at $X_k$.

From Equations 1 and 2, it is found that a third-degree equation occurs with certainty. Since nonlinear simultaneous

equations must be solved, the solution cannot be obtained easily. In addition, Globus attempts to obtain the solution by means of a Newton-Raphson method, but this method is an approximation. In some cases, the solution does not converge and cannot be obtained.

In addition, the method using a right-cross cell has the drawback that it is impossible to use the result of a finite-element method analysis using a tetrahedral cell, and data for the right-cross cell must be collected.

Accordingly the present invention provides a method for drawing vector data as stream lines in a space in a computer system having a display comprising the steps of: collecting position data and vector data at each of vertexes of a plurality of tetrahedral cells dividing said space; calculating a critical point which is in the tetrahedral cell, wherein said vector data is zero at the critical point, using said collected position data and vector data; calculating a Jacobian matrix J if there is the critical point; calculating eigenvalues of said calculated Jacobian matrix; calculating a starting point of a stream line for each of the eigenvalues, wherein said starting point is within the tetrahedral cell and is displayed at a distance from the critical point; and calculating the stream line from the starting point; and displaying the stream line on the display.

In an embodiment, the step of collecting position data and vector data may be performed by collecting position and vector data obtained by a finite-element method analysis. Accordingly, it becomes unnecessary to collect data a new for the right-cross cell, unlike with the prior art.

Further the step of calculating the critical point may be executed by using position and vector data transformed into volume coordinates. Accordingly, the ease with which the calculation of the critical point can be effected is improved.

Further, if the step of calculating the Jacobian matrix J is performed by using a coordinate transformation matrix $M_X$ transformed into the volume coordinates for the position data and a coordinate transformation matrix $M_V$ transformed into the volume coordinates for the vector data, the ease and speed of calculation of the Jacobian matrix is improved J, as compared with the prior art.

In addition, the step of displaying the stream line may be performed by displaying only the stream line calculated from the starting point calculated for one of the eigenvalues having a predetermined value. The predetermined value of the eigenvalue may be a complex number. In such a case, the state of a space to be displayed can be displayed clearly by displaying only the desired phenomenon. If there is a complex number, then a vortex is displayed.

Further, the step of displaying the stream line may include selecting a desired point and displaying a stream line from the desired point on the display. In such a case, random display of the stream line is made possible as needed.

An embodiment of the present invention will now be described, by way of example only, with reference to the accompanying drawings in which:

Figure 1 is a block diagram of the entire structure of the present invention;

Figure 2 is a high level flowchart of the present invention;

Figure 3 shows an example of a typical tetrahedral cell;

Figure 4 is an illustration used to explain how global coordinates are transformed into volume coordinates;

Figure 5 is an illustration showing the case in which an eigenvalue of the tetrahedral cell having a critical point is positive;

Figure 6 is an illustration showing the case in which the eigenvalue of the tetrahedral cell having a critical point is a complex number; and

Figure 7 is an illustration showing an example of a right-cross cell employed in the prior art.

Figure 1 schematically shows a computer system according to an embodiment. In the embodiment, by using position data representative of the position of the vertex of each cell read from a device for storing tetrahedral cell data 7 and velocity data representative of the velocity of a fluid at that position, a processor 1 performs the calculation in accordance with a control program stored in main memory 5. It is to be noted that the device for storing tetrahedral cell data may form a part of main memory. Based on the result of the calculation performed by the processor 1, a stream line is calculated and displayed through a display controller 9, on a display 15. An input-output device 13 may comprise a mouse, a keyboard, a printer, or the like, and the device 13 is used when a position on the display 15 is specified or the stream line is printed on paper, for example. When the stream line is displayed as described above, a point specified by the input-output device 13 may be displayed as a starting point of the stream line. A hard disk 11 is one normally used to store programs to be loaded into main memory 5 and data to be stored in the device for storing tetrahedral cell data 7.

Figure 2 is a schematic flowchart of the present embodiment. In step 23, tetrahedral cell data is first collected. The tetrahedral cell data is position data of the vertex of each tetrahedral cell and velocity data at that position. In step 25, a critical point is calculated from the position and velocity data for each tetrahedral cell. A point whose velocity is zero is not always in the tetrahedral cell. In step 27, a Jacobian matrix J is calculated when a critical point is found, and the eigenvalues and the eigenvectors thereof are then calculated. This calculation is merely a matrix operation. Since the velocity is zero at the critical point, a stream line cannot be drawn from the critical point. Hence, in step 29, a point moved a microscopic distance from the critical point is regarded as the starting point. In step 31, the stream line is calculated from this starting point and displayed on a display.

The operation will hereinafter be described in detail with reference to Figure 2.

The tetrahedral cell data is first collected, but data obtained by a finite element method analysis is employed. Therefore, particular data is not needed and the tetrahedral cell data will not be described any further.

Next, the critical point in each tetrahedral cell is obtained. Before that, however, a basic description will be given. Figure 3 shows a typical tetrahedral cell. In the figure, each vertex and an arbitrary point X in this tetrahedral cell are represented by the global coordinates XYZ. However, it becomes complicated to employ the global coordinates to represent the inside of the tetrahedral cell. Hence, if the volume of the whole of the tetrahedral cell is assumed to be 1 and the tetrahedral cell is divided into four parts as shown in Figure 4, it results in small tetrahedral cells having volumes of p, q, r, and 1 - p - q - r. If the point X is moved, the volume of the respective small tetrahedral cells will be changed by the movement of the point X, so that the volume coordinates are useful for representing the point X. The transformation of the global coordinate XYZ system into the volume coordinates is performed as follows:

Equation 3

$$\vec{X} = \begin{pmatrix} x \\ y \\ z \end{pmatrix}$$

$$= p \times \begin{pmatrix} x_0 \\ y_0 \\ z_0 \end{pmatrix} + q \times \begin{pmatrix} x_1 \\ y_1 \\ x_1 \end{pmatrix} + r \times \begin{pmatrix} x_2 \\ y_2 \\ z_2 \end{pmatrix} + (1 - p - q - r) \times \begin{pmatrix} x_3 \\ y_3 \\ z_3 \end{pmatrix}$$

$$\begin{pmatrix} x - x_3 \\ y - y_3 \\ z - z_3 \end{pmatrix} = \underbrace{\begin{bmatrix} x_0 - x_3 & x_1 - x_3 & x_2 - x_3 \\ y_0 - y_3 & y_1 - y_3 & y_2 - y_3 \\ z_0 - z_3 & z_1 - z_3 & z_2 - z_3 \end{bmatrix}}_{M_x} \times \begin{pmatrix} p \\ q \\ r \end{pmatrix}$$

At this point, $x_i$, $y_1$, and $z_i$ represent the vertex coordinates of a vertex i. The velocity vectors are likewise given as follows:

Equation 4

$$\begin{pmatrix} u - u_3 \\ v - v_3 \\ w - w_3 \end{pmatrix} = \underbrace{\begin{bmatrix} u_0 - u_3 & u_1 - u_3 & u_2 - u_3 \\ v_0 - v_3 & v_1 - v_3 & v_2 - v_3 \\ w_0 - w_3 & w_1 - w_3 & w_2 - w_3 \end{bmatrix}}_{M_v} \times \begin{pmatrix} p \\ q \\ r \end{pmatrix}$$

At this point, $u_i$, $v_i$, and $w_i$ represent the vector data of the vertex i.

A matrix $M_V$ is calculated to check whether the critical point is found in the tetrahedral cell. If the value of the matrix is zero, the critical point will not be found, and calculation thereafter becomes unnecessary. If the value is not zero, then u, v, and w of Equation 4 are made zero to obtain a point in the tetrahedral cell whose velocity is zero. Equation 5 is then obtained as follows:

Equation 5

$$\begin{pmatrix} p \\ q \\ r \end{pmatrix} = M_v^{-1} \times \begin{pmatrix} -u_3 \\ -v_3 \\ -w_3 \end{pmatrix}$$

The point whose velocity is zero is obtained by calculating Equation 5. However, if the point obtained is outside of the tetrahedral cell, the solution does not make sense. However, if p, q, r, and 1 - p - q - r are made $0 \leqq p \leqq 1$, $0 \leqq q \leqq 1$, $0 \leqq r \leqq 1$, and $0 \leqq 1 - p - q - r \leqq 1$, it can be confirmed that the solution makes sense. Up to this point, the existence and the coordinates of the critical point can be obtained.

The Jacobian matrix J will be calculated next. A general equation of the Jacobian matrix J is as follows:

Equation 6

$$J = \begin{bmatrix} \frac{\partial u}{\partial x} & \frac{\partial u}{\partial y} & \frac{\partial u}{\partial z} \\ \frac{\partial v}{\partial x} & \frac{\partial v}{\partial y} & \frac{\partial v}{\partial z} \\ \frac{\partial w}{\partial x} & \frac{\partial w}{\partial y} & \frac{\partial w}{\partial x} \end{bmatrix}$$

This equation is transformed as follows:

Equation 7

$$J = \begin{bmatrix} \frac{\partial u}{\partial x} & \frac{\partial u}{\partial y} & \frac{\partial u}{\partial z} \\ \frac{\partial v}{\partial x} & \frac{\partial v}{\partial y} & \frac{\partial v}{\partial z} \\ \frac{\partial w}{\partial x} & \frac{\partial w}{\partial y} & \frac{\partial w}{\partial z} \end{bmatrix} = \begin{bmatrix} \frac{\partial p}{\partial x} & \frac{\partial q}{\partial x} & \frac{\partial r}{\partial x} \\ \frac{\partial p}{\partial y} & \frac{\partial q}{\partial y} & \frac{\partial r}{\partial y} \\ \frac{\partial p}{\partial z} & \frac{\partial q}{\partial z} & \frac{\partial r}{\partial z} \end{bmatrix} \times \begin{bmatrix} \frac{\partial u}{\partial p} & \frac{\partial v}{\partial p} & \frac{\partial w}{\partial p} \\ \frac{\partial u}{\partial q} & \frac{\partial v}{\partial q} & \frac{\partial w}{\partial q} \\ \frac{\partial u}{\partial r} & \frac{\partial v}{\partial r} & \frac{\partial w}{\partial r} \end{bmatrix}$$

The above-described $M_x$ is modified as follows when the critical point is found in the tetrahedral cell and does not degenerate.

Equation 8

$$\begin{bmatrix} \frac{\partial p}{\partial x} & \frac{\partial p}{\partial y} & \frac{\partial p}{\partial z} \\ \frac{\partial q}{\partial x} & \frac{\partial q}{\partial y} & \frac{\partial q}{\partial z} \\ \frac{\partial r}{\partial x} & \frac{\partial r}{\partial y} & \frac{\partial r}{\partial z} \end{bmatrix} = M_x^{-1}$$

This equation is obtained by modifying Equation 3, which was partially differentiated with x, y, and z. Also, the above-described $M_V$ is likewise obtained by partially differentiating Equation 4 with u, v, and w and modifying the differentiated Equation 4.

Equation 9

$$\begin{bmatrix} \frac{\partial u}{\partial p} & \frac{\partial v}{\partial p} & \frac{\partial w}{\partial p} \\ \frac{\partial u}{\partial q} & \frac{\partial v}{\partial q} & \frac{\partial w}{\partial q} \\ \frac{\partial u}{\partial r} & \frac{\partial v}{\partial r} & \frac{\partial w}{\partial r} \end{bmatrix} = M_v$$

By these Equations 8 and 9, the Jacobian matrix J is modified as follows:

Equation 10 $$J = M_x^{-t} \times M_v^t$$

It is to be noted that $A^t$ represents a transposed matrix of the matrix A, and $A^{-1}$ represents an inverse matrix of the matrix A. In this manner, the Jacobian matrix J is obtained easily. Previously, the Jacobian matrix J had to be obtained one at a time because u, v, and w were functions of x, y, and z. However, the calculation of the Jacobian matrix J becomes a simple matrix calculation by employing the volume coordinates in the above-described manner, so that the advantage arises that the calculation of the Jacobian matrix J became simple. The eigenvalues and eigenvectors of this Jacobian matrix J are obtained by a method well known in the prior art. Therefore, the method of calculating the eigenvalues and the eigenvectors will not be described. Up to this point, a description up to step 27 of Figure 2 has been made.

At this point, the form of the stream line is classified according to the eigenvalues of the Jacobian matrix J. This is described in J. Helman and L. Hesselink, "Visualizing Vector Field Topology in Fluid Flows," IEEE Computer Graphics and Applications, Vol. 11, No. 3, pp. 33-46. According to this, a positive eigenvalue corresponds to a velocity vector going away from a critical point (see Figure 5), while a negative eigenvalue corresponds to a velocity vector going toward a critical point. In addition, in the case where an eigenvalue is a complex number, a velocity vector forms a vortex locally, as shown in Figure 6. When such states are found and a stream line is drawn taking the critical point into consideration, the desired phenomenon can be displayed. If only a vortex is desired, the stream line is calculated and drawn only when the eigenvalue is a complex number. If only an attracting state is desired, the stream line is drawn only when the eigenvalue is negative.

The eigenvalues comprise 3 eigenvalues and therefore three eigenvectors are obtained. However, in the case where an eigenvalue of a complex number is found, two eigenvalues are a complex number and the remaining one is a real number. Drawing a stream line for each eigenvalue or for a selected eigenvalue is arbitrary and depends on the state of the space that displays the stream line.

If the eigenvalues and the eigenvectors are obtained in the above-described manner, the stream line can be drawn by using these values and vectors. However, since the critical point is a point whose velocity vector is zero, the stream line cannot be drawn from the critical point. For this reason, a point moved a microscopic distance from the critical point is regarded as the starting point. However, since the eigenvector is effective in one tetrahedral cell, the amount of movement has to be set so that the eigenvector is not moved to outside of the tetrahedral cell. The starting point is therefore expressed in terms of Equation 11:

Equation 11

$$\vec{P}_{seed} = \vec{P}_c + k \times M_x^{-1} \times \vec{V}_{eigenvector}$$

In Equation 11, a position vector $P_{seed}$ represents a starting point, a position vector $P_c$ represents a critical point, and a vector $V_{eigenvector}$ is the eigenvector of the eigenvalue. If k is adjusted so that each component of $P_{seed}$ becomes an value between 0 and 1, then there is no possibility that the eigenvector is moved to outside of the tetrahedral cell. In the case of the eigenvalues including complex numbers, it is necessary to calculate the vector $V_{eigenvector}$ as a vector perpendicular to the remaining eigenvector having a real number. This is because, when the velocity vector forms a vortex, that method is easy to display. Since the obtained starting point has been expressed by the volume coordinates, Equation 3 is employed when the starting point is transformed the global coordinate XYZ system. Up to this point, a description up to the step 29 of Figure 2 has been made.

If the starting point is obtained in the above-describe manner and the locus of an imaginary point whose weight and size are zero is released from the starting point is determined, then the stream line can be drawn. Methods of drawing such a locus are well known in the art, and a detailed description thereof will not be given. Further, in the case where a

plurality of eigenvalues is found for one tetrahedral cell and a plurality of tetrahedral cells having a critical point is found in a target space, it can be freely determined whether one point is displayed or all points are displayed, as described above. It is well known to those skilled in the art how to specify and display the nature of a target field and the type of phenomenon desired to be displayed. Since the case of the eigenvalue being negative indicates that the velocity vector is drawn to the critical point and it is therefore difficult to display as is, a locus obtained when the case of the velocity vector being drawn to the critical point is inversely tracked is to be displayed as a stream line. This completes the description up to step 31 and the desired stream line was displayed.

As described hereinbefore, according to the present invention, the starting point of the stream line can be obtained easily by using the result of a conventional finite element method analysis.

In addition, the critical point can be obtained without solving nonlinear simultaneous equations, and the starting point of the stream line can be obtained by using the critical point.

Further, the Jacobian matrix J can be obtained easily and the starting point of the stream line can be obtained with the eigenvalue and the eigenvector of the Jacobian matrix J.

## Claims

1. A method for drawing vector data as stream lines in a space in a computer system having a display comprising the steps of:
   collecting position data and vector data at each of vertexes of a plurality of tetrahedral cells dividing said space;
   calculating a critical point which is in the tetrahedral cell, wherein said vector data is zero at the critical point, using said collected position data and vector data;
   calculating a Jacobian matrix J if there is the critical point;
   calculating eigenvalues of said calculated Jacobian matrix;
   calculating a starting point of a stream line for each of the eigenvalues, wherein said starting point is within the tetrahedral cell and is displayed at a distance from the critical point; and
   calculating the stream line from the starting point; and displaying the stream line on the display.

2. The method as claimed in claim 1, wherein the step of collecting comprises collecting position and vector data obtained by a finite-element method analysis.

3. The method as claimed in either of claims 1 or 2, wherein the step of calculating said critical point is executed by using said position and vector data transformed into volume coordinates.

4. The method as claimed in claim 3, wherein the step of calculating said Jacobian matrix J is performed by using a coordinate transformation matrix $M_X$ transformed into said volume coordinates for said position data and a coordinate transformation matrix $M_V$ transformed to said volume coordinates for said vector data.

5. The method as claimed in any preceding claim, wherein the step of displaying said stream line is performed by displaying only said stream line calculated from said starting point calculated for one of said eigenvalues having a predetermined value.

6. The method as claimed in claim 5, wherein said predetermined value of the eigenvalue is a complex number.

7. The method as claimed in any preceding claim, wherein the step of displaying said stream line includes selecting a desired point and displaying a stream line from said desired point on said display.

8. A system, having a display, for drawing vector data as stream lines in a space on said display, comprising:
   means for collecting position data and vector data at the vertexes of a plurality of tetrahedral cells dividing said space;
   means for calculating a critical point which is in the tetrahedral cell, wherein said vector data is zero at the critical point, using said collected position data and vector data;
   means for calculating a Jacobian matrix J if there is the critical point;
   means for calculating eigenvalues of said calculated Jacobian matrix;
   means for calculating a starting point of a stream line for each of the eigenvalues, wherein said starting point is within the tetrahedral cells and is displayed by a distance from the critical point;
   means for calculating the stream line from the starting point; and for displaying the stream line on the display.

**9.** The system as claimed in claim 8 wherein said means for collecting comprises means for collecting position and vector data obtained by a finite-element method analysis.

**10.** The system as claimed in either of claims 8 or 9, wherein said means for calculating said critical point calculates it by using said position and vector data transformed into volume coordinates.

**11.** The system as claimed in claim 10, wherein said means for calculating said Jacobian matrix J calculates it by using a coordinate transformation matrix $M_X$ transformed into said volume coordinates for said position data and a coordinate transformation matrix $M_V$ transformed into said volume coordinates for said vector data.

**12.** The system as claimed in any of claims 8 to 11, wherein said means for displaying said stream line displays only said stream line from said starting point for said eigenvalues having a predetermined value.

**13.** The system as claimed in any of claims 8 to 12, wherein said predetermined value of the eigenvalue is a complex number.

**14.** The system as claimed in any of claims 8 to 13, wherein said means for displaying said stream line includes means for selecting a desired point and displaying a stream line from said desired point on said display.

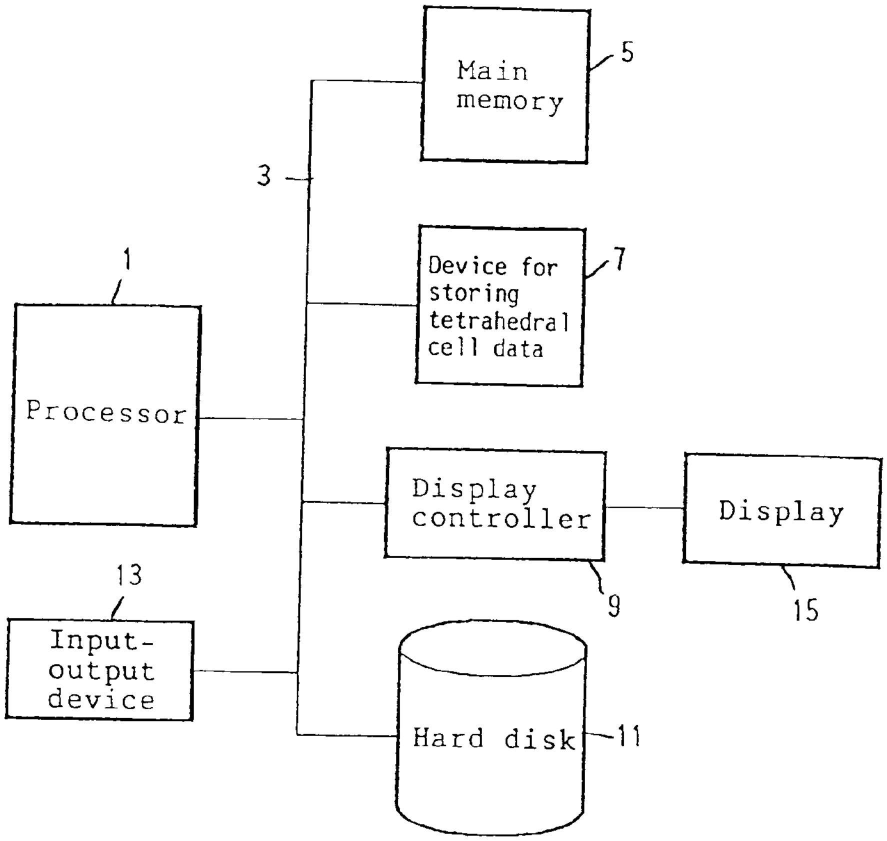
Main memory
5
3
Device for storing tetrahedral cell data
7
1
Processor
Display controller
Display
9
15
13
Input-output device
Hard disk
11

FIG. 1

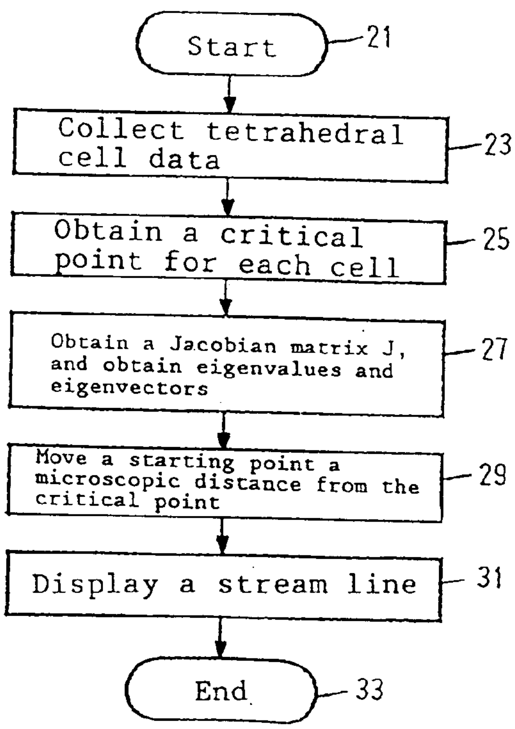
Start
21
Collect tetrahedral cell data
23
Obtain a critical point for each cell
25
Obtain a Jacobian matrix J, and obtain eigenvalues and eigenvectors
27
Move a starting point a microscopic distance from the critical point
29
Display a stream line
31
End
33

FIG. 2

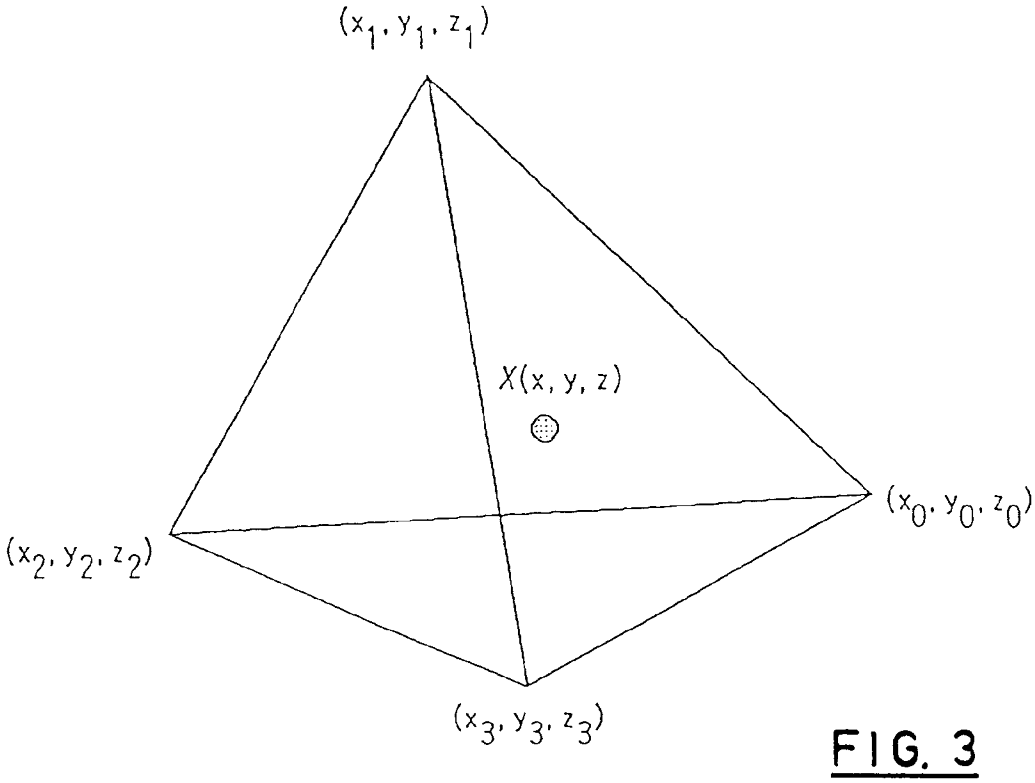
(x1, y1, z1)
X(x, y, z)
(x0, y0, z0)
(x2, y2, z2)
(x3, y3, z3)

FIG. 3

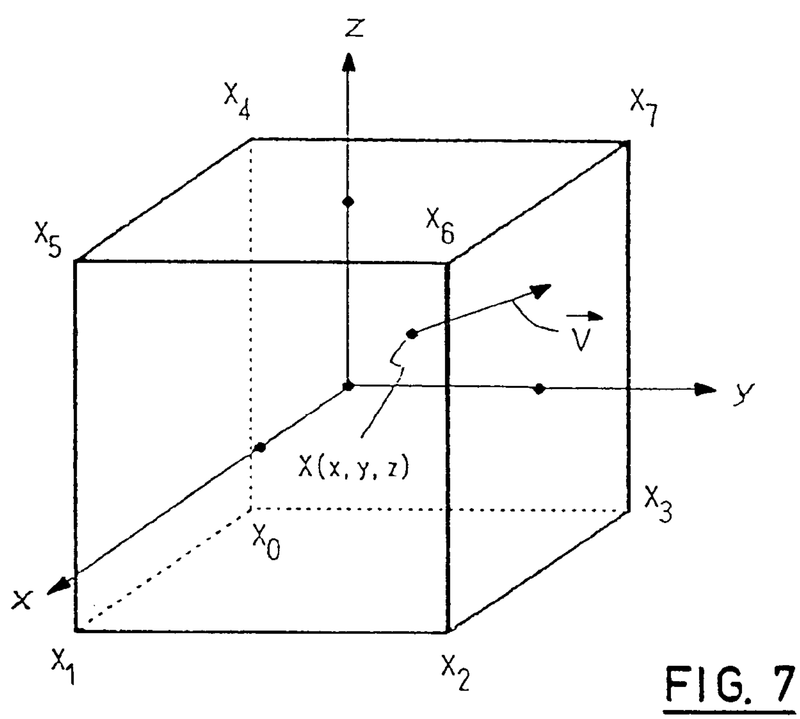
z
X4
X7
X5
X6
V
y
X(x, y, z)
X3
X0
x
X1
X2

FIG. 7

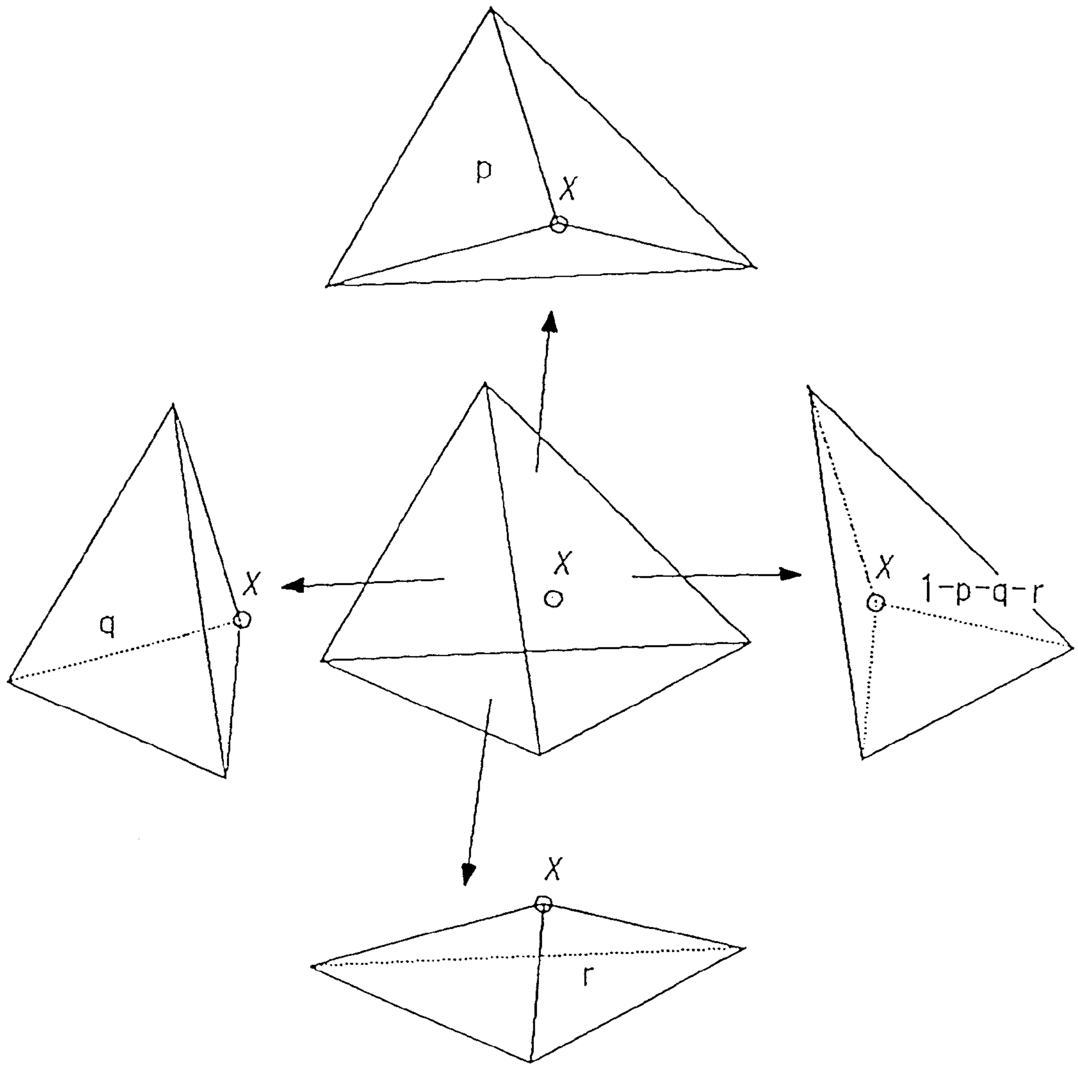


FIG. 4

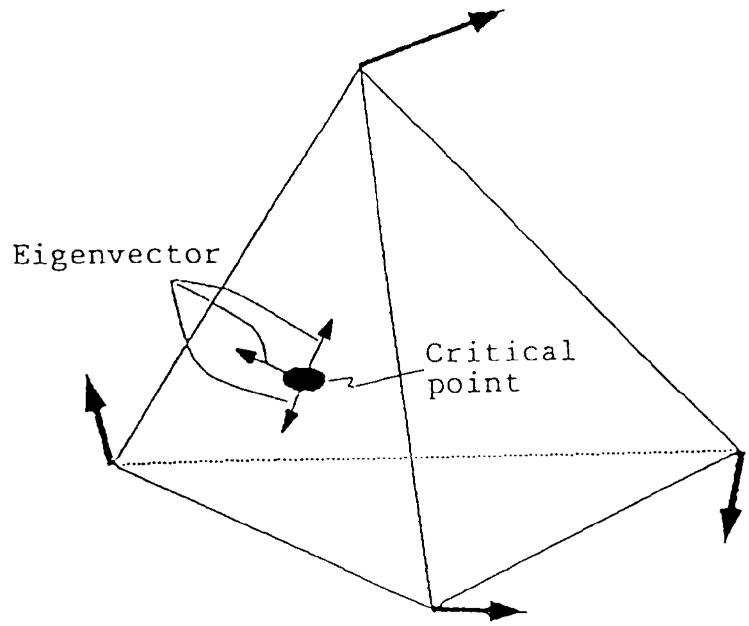


FIG. 5

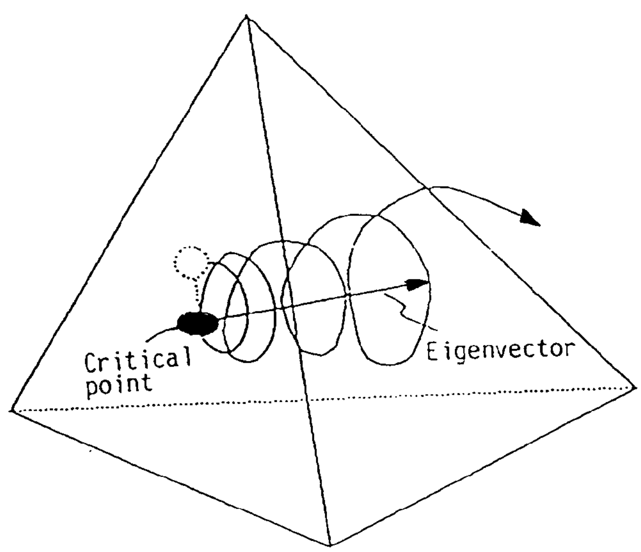


FIG. 6